# EUROPEAN PATENT APPLICATION

(11) **EP 3 919 949 A1**
(43) Date of publication of application: **08.12.2021**
(21) Application number: 20177729.9
(22) Date of filing: 02.06.2020
(51) Int. Cl.: G02B 6/12, G02B 6/124, G02B 6/136, G02B 6/293

(54) **E-BEAM BASED FABRICATION METHOD FOR MICRO-AND NANO-STRUCTURES AND OPTICAL DEVICES FABRICATED BY THE METHOD**

(71) Applicant: ETH Zürich, 8092 Zürich (CH)
(72) Inventor: Reig Escalé, Marc, 8057 Zürich (CH); Kaufmann, Fabian, 8049 Zürich (CH); Pohl, David, 8037 Zürich (CH); Grange, Rachel, 2800 Delémont (CH)
(74) Representative: Frei Patent Attorneys

(57) **Abstract**

The present invention relates to an e-beam based fabrication method for high-quality micro- and nano-structures and to devices, in particular optical devices, fabricated by use of said method. The fabricated micro- and nano-structures are of high-quality in terms of surface roughness, minimal feature size and the sharpness of edges, corners etc.

The method comprises a step S3 of determining a plurality of sub-areas that sum up to a continuous area to be exposed, wherein a dimension of a first kind of sub-areas 5 of the plurality of sub-areas is smaller than a related dimension of a second kind of sub-areas 6 of the plurality of sub-areas, a step S4 of providing an exposure protocol being configured to control an e-beam facility in a manner that the plurality of sub-areas is exposed, and a step S5 of exposing a surface of a layered structure by use of the exposure protocol.

## Description

The present invention relates to a method for fabricating high-quality micro- and nano-structures and devices, in particular optical devices, fabricated by use of said method. More concrete, the method is an e-beam based method for fabricating micro- and nano-structures of high-quality in terms of surface roughness, minimal feature size and the sharpness of edges, corners etc.

The method is in particular suitable for optical devices due to reduced scattering on device surfaces, in particular due to reduced surface roughness, and due to its capability to add small-size features, such as gratings, gaps, corners, tips etc. to optical elements, such as reflectors, waveguides (in particular waveguides comprising vertically arranged walls) etc.

Further, the method is in particular suitable for the fabrication of devices, in particular optical devices, that comprise a micro- or nano-structure etched into a device layer of a material that is chemically inert or inert with respect to gases and/or fluids usually used for etching.

Even further, the method is in particular suitable for the fabrication of devices, in particular optical devices, that shall not or must not comprise a conductive or semi-conductive layer, at least not in a structured functional region of the device.

The application of the method is not restricted to the fabrication of optical devices because at least some of the advantages mentioned with respect to the method according to the invention are also present in e-beam fabrication processes used for non-optical devices. In other words, the inventive idea is suitable for any e-beam based fabrication process, including e-beam fabrication processes comprising at least one of a conductive or semi-conductive layer in a structured functional region of the device, the use of additive procedures for fabricating the micro-/nano-structure, and/or etching of a device layer of a material that is not chemically inert or not inert with respect to gases and/or fluids usually used for etching, for example.

There are various effects that limit the quality of micro- and nano-structures fabricated by state-of-the-art e-beam methods, for example the accumulation of electrons in the resist. This effect is in particular severe in the case of the fabrication of devices comprising micro- and/or nanostructures but that shall not or must not comprise a conductive or semi-conductive layer in a structured functional region by e-beam lithography.

In state-of-the-art methods, the adverse effects of electron accumulation are mitigated by the use of a thin conductive layer on top of the resist or below the resist. However, these approaches make the fabrication method much more complex by adding additional steps that have to be carried out using step-specific tooling, namely the deposition of the conductive layer, its removal after e-beam exposure and measures for avoiding redeposition and/or for removing redeposition, for example. Further, the effectiveness of the use of a thin conductive layer depends on the exposure parameters, such as dose, acceleration, beam current etc. This means, that the adverse effects caused by electron accumulation are mitigated to some extent in the fabrication of some devices but not or to a reduced manner only in the fabrication of other devices. Further - as pointed out above - a conductive layer in any shape must not be used for some devices. Further, the minimal feature size and/or surface properties may not be sufficient even if a conductive layer (or a conductive substrate) is used. Any approach for improvement of the minimal feature size and/or of the surface properties leads to fabrication methods that need even more resources and that are hence no option for commercialization. The use of resist stacks, this means the use of at least two different resists that are arranged on top of the other, is an example of an improvement approach that leads to fabrication methods that are even more resource intensive and even more demanding.

WO 2018/031916 A1 as well as the following scientific publications represent the state-of-the art in e-beam based fabrication methods, in particular in e-beam based fabrication methods for tunable optical devices, and related devices: "Extreme electro-optic tuning of Bragg mirrors integrated in lithium niobate nanowaveguides", Optics Letters Vol. 43, Issue 7, pp. 1515-1518 (2018); "Bragg gratings in thin-film LiNbO3 waveguides", Optics Express, Vol. 25, Issue 26 (2017); "Nanophotonic lithium niobate electro-optic modulators", Optics Express, Vol. 26, Issue 2 (2018).

It is an object of the invention to provide a fabrication method based on e-beam lithography that overcomes limitations of related state-of-the fabrication methods, for example in terms of at least one of complexity (this means number of fabrication steps and complexity of these steps), fabrication costs, fabrication time, surface roughness, minimal feature size and sharpness of edges.

In particular, it is an object of the invention to provide a fabrication method based on e-beam lithography that is at least comparable to the most advanced state-of-the art e-beam fabrication methods in terms of minimal feature size and surface roughness but that is more mass production friendly, in particular for the fabrication of optical devices. The latter means that it is in particular suitable in a more mass production friendly manner for the fabrication of devices that shall not or must not comprise a conductive or semi-conductive layer in a structured functional region and/or that comprise a feature that is etched in a device layer of a material that is chemically inert or inert with respect to gases and/or fluids usually used for etching.

A second aspect of the invention concerns an optical device that cannot be fabricated in a commercially useful manner without using the fabrication method according to the invention.

Hence, it is another object of the invention to provide an optical device, more precisely an integrated multichannel tunable filter.

As mentioned, the present invention relates to a method for fabricating high-quality micro- and nano-structures and devices, in particular optical devices, fabricated by use of said method. This also means that the fabricated devices comprise high-quality micro- and/or nanostructures. The quality of a micro- or nano-structure is considered high if at least one of the following conditions is fulfilled:
- The surface roughness, more concretely the root mean square roughness (RMS roughness) is in the nanometer range, in particular below 5 nm, for example below 4, 3, 2 or 1 nm. In other words, the smaller the RMS roughness the higher the quality of the micro- and nano-structure. It was observed that the method according to the invention is capable to produce micro- and nanostructures in lithium niobate (LiNbO₃) on an insulator (SiO₂) that have reproducibly an RMS roughness below 1 nm.
   The RMS surface roughness can for example be measured directly with an atomic force microscope (AFM) or indirectly via measuring the scattering of radiation, in particular electromagnetic radiation, from a structure produced by the method and/or by measuring losses experienced by radiation, in particular electromagnetic radiation, interacting with a structure produced by the method.
   For example, if the structure produced is a waveguide, the RMS surface roughness can be estimated, at least in a relative manner with respect to a waveguide produced by another fabrication method.
- The sharpness of corners, edges etc. is increased. For example, the radius of curvature of an edge or a corner, for example an edge formed by two planes arranged in 90 degrees relative to each other, said edge being intended to be formed by a line, is reduced. In other words, the smaller said radius of curvature (the sharper the producible corners, edges etc.) the higher the quality of the micro- and nano-structure.

A method according to the invention is a method suitable for fabricating micro- and nano-structures. The method comprises the steps of:
- Providing a layered structure comprising a resist layer.
   The resist layer may be a positive or negative resist layer.
   In most embodiments, the layered structure comprises at least one layer to be structured by a removing (in particular etching) and/or additive (for example deposition) process in addition to the resist layer.
   It has been observed that the method according to the invention is in particular suitable in combination with structuring the layer to be structured by etching.
   The at least one layer to be structured is the layer that comprises and/or supports the micro- or nanostructure after the fabrication process. However, the micro- or nanostructure can be further processed. For example, it can be released, embedded, connected etc.
   A layer to be structured is also called a device layer.
   The layered structure can be arranged on a base.
   The resist layer is a layer having a solubility that can be modified by energy input. The energy input is caused by exposing it to an electron beam (e-beam) in the present invention.
   In most embodiments, the resist layer is the layer that is transformed to a mask arranged on top of the at least one device layer, said mask covering regions of the at least one device layer that must not be processed and exposing regions of the at least one device layer that are to be processed, in particular etched, altered or covered.
- Inserting the layered structure into an e-beam facility. The e-beam facility can be any commercially available or self-developed e-beam facility.
- Determining the shape of a continuous area to be exposed to electrons on a surface of the layered structure.
   In other words, the method comprises the step of determining the footprint of the structure that is to be produced in the device layer or on top of the device layer.
   Yet in other words, the method comprises the step of determining the shape to be written into the resist layer for its later transformation into the mask and the even later transfer into or onto the device layer.
   In the following, the shape is considered to be given by the continuous area to be exposed and its contour.
- Providing an exposure protocol to the e-beam facility. The exposure protocol is configured to control the e-beam facility in a manner that an electron beam (e-beam) exposes ("patterns") an area of the surface of the layered structure, said area of the surface of the layered structure comprising the shape of the continuous area to be exposed.
   In other words, the exposure protocol comprises the exposure pattern.
   In embodiments, the area of the surface of the layered structure has the shape of the continuous area to be exposed. However, there may be need for further areas to be exposed, for example for producing position (alignment) markers for subsequent steps, or markers for identifying specific regions on the device layer or on the layered structure, for example.
   As a rule, the exposed area of the surface of the layered structure is part of the surface of the top-most layer of the layered structure, usually of the resist layer.
- Exposing the area of the surface of the layered structure by use of the exposure protocol. This means operating the e-beam facility according to the exposure protocol.
- Determining a plurality of sub-areas that sum up to the continuous area to be exposed, wherein a dimension of a first kind of sub-areas of the plurality of sub-areas is smaller than a related dimension of a second kind of sub-areas of the plurality of sub-areas, and by the exposure protocol being configured to control the e-beam facility in a manner that the plurality of sub-areas is exposed.
   In other words, the continuous area to be exposed is split up into at least two kinds of sub-areas that differ in size and/or shape. Hence, a length along a characteristic axis (for example a diagonal or a side length) and/or the effective area of the sub-area are examples of a dimension of a sub-area.
   Yet in other words, the continuous area to be exposed is meshed in a non-uniform manner.
   In an embodiment, the meshing is non-uniform because the size of a basic meshing element is non-uniform and varies in dependence on the local contour of the shape to be exposed. This means that the basic meshing element, for example a rectangle such as a square, is scaled in dependence on the local contour to which a specific basic meshing element contributes. The more the local contour is bent the more is the basic meshing element scaled down.
   A contour element in the shape of a straight line, a contour element having a moderate curvature (a large radius of curvature), a contour element having a significant curvature (a small radius of curvature), a contour element forming a sharp corner with a large opening angle, and a contour element forming a sharp corner with a small opening angle are examples of local contours with increasing degree of bending.
   Sometimes, the meshing with a specific geometric element is called "discretization". Normally, "discretization" implies that the discretized area is approximated or reproduced by an arrangement of said specific geometric elements. If this wording is used, the shape of the continuous area to be exposed is non-uniformly discretized.
   For example, a first discretization is used for a contour portion (contour element) of the shape of the continuous area to be exposed and a second discretization is used for an interior region of said shape. In particular, the specific geometric element of the first discretization is smaller than the specific geometric form of the second discretization.
   At least one further discretization may be used for the regions forming the contour of the shape to be exposed. The size of the geometric element of the discretizations may depend on the degree of local bending (as discussed above).
   In many embodiments, the plurality of sub-areas sums up to the continuous area to be exposed without overlaps.

In many embodiments, the exposure protocol is configured to control the e-beam facility in a manner that the plurality of sub-areas is exposed in a consecutive manner.

As mentioned above, the dimension of sub-areas of the first kind may depend on the degree of curvature of a portion of the contour of the shape to be exposed, said portion being represented by the sub-areas of the first kind, in an embodiment.

In an embodiment, at least the dimension of the sub-areas of the first kind may be of a size that allows exposure by a non-moving beam. In this embodiment, the diameter of the e-beam at the position of exposure, usually on the surface of the resist to be exposed, may be adapted to the dimension of the sub-areas.

For example, the sub-areas may be given by squares and the diameter of the e-beam may correspond to the inside circle of the squares.

For example, at least the dimension of the sub-areas of the first kind may be between 1 and 10 nm, for example between 1 and 5 nm, for example 1, 2, 3, 4 or 5 nm.

In an embodiment, both the dimension of the sub-areas of the first kind and the dimension of the sub-areas of the second kind are such that they can be exposed by a non-moving e-beam. In particular, but not exclusively, in this embodiment, the exposure of the sub-areas of the second kind can differ from the exposure of the sub-areas of the first kind in the operating parameters used. For example, at least one of the diameter of the e-beam at the position of exposure, the dwell time, and the current may differ.

Further, the number of different kinds of sub-areas and the number of sub-areas of a kind of sub-areas may depend on the complexity of the continuous area to be exposed. Simple geometric shapes, such as elongated rectangles having a small width, for example a width between 100 and 1000 nm as often used for optical waveguides, may be split up in two kinds of sub-areas only. Sub-areas of a first kind may be used for the end region(s) and sub-areas of a second kind may be used for regions of the simple geometric shape that do not form end regions. The number of sub-areas of the first kind may correspond to the number of end regions and the number of sub-areas of the second kind may be one.

As another example, a rectangular, in particular a rectangular having a significant length and width, may be split up in two kinds of sub-areas or in three kinds of sub-areas.

If the rectangular shape is split up in two kinds of sub-areas, sub-areas of a first kind may form the four corners of the rectangular shape and sub-areas of a second kind may form the residual cross-like shape.

The sub-areas of the first kind may have a square shape and the number of the sub-areas of the first kind may be four (one for each corner), 12 (three for each corner), 16 (four for each corner), 24, 32 etc., for example. The number of sub-areas of the second kind may be one. One can envisage other shapes of the sub-areas and/or other numbers of sub-areas of a kind of sub-areas.

If the rectangular shape is split up in three kinds of sub-areas, sub-areas of a first kind may form the four corners of the rectangular shape, sub-areas of a second kind may form the regions along the sides of the rectangular shape and between two clusters of sub-areas of the first kind forming corners of the rectangular shape, and sub-areas of a third kind may form the residual interior rectangle.

For example, the sub-areas of the first kind may have a square shape, the number of the sub-areas of the first kind may be four (one for each corner), 16 (four for each corner), 36 (nine for each corner), 64 (16 for each corner) etc. and the sub-areas of the first kind may be arranged in a manner to form clusters of square shapes in the corners of the rectangular shape.

The number of sub-areas of the second kind may be four (one for each region along the sides of the rectangular shape and between two clusters of sub-areas of the first kind), for example. However, a larger number of sub-areas of the second kind may be advantageous in terms of the overall quality of the rectangular structure produced finally (see below).

The number of sub-areas of the third kind may be one, for example. As a rule, there is no need to split up a section of the continuous shape to be exposed, if the section is an interior section, this means if the section does not contribute to the contour of the continuous area to be exposed. This is also the reason why the inventors call an e-beam fabrication method according to the invention a "bulk-sleeve e-beam method" and the idea behind this method the "bulk-sleeve e-beam technique".

In an embodiment, at least one portion of the counter of the shape to be exposed is given by at least one sub-area of the first kind of sub-areas.

In particular, a non-straight contour portion of the shape to be exposed can be given by at least one sub-area of the first kind of sub-areas.

In an embodiment, the plurality of sub-areas that sum up to the continuous area to be exposed is determined in a manner that the contour of the continuous area is given by sub-areas of the first kind and interior sections of the area are given by one or more sub-areas of the second kind.

As mentioned above, there may be at least one further kind of sub-areas, in particular for features of the contour that differ significantly from features reproduced by sub-areas of the first kind.

In an embodiment, the number of different kinds of sub-areas is equal or larger than the number of geometric features of the shape to be exposed, wherein a kind of sub-areas is optimized for each geometric feature, in particular optimized in terms of dimension, number of sub-areas and shape.

For example, the number of different kinds of sub-areas may equal to the number of geometric features plus one, wherein the kind of sub-areas that is in excess is designed to form interior regions of the area to be exposed.

As indicated by the examples given above, quality requirements on the produced structure cause often an increased number of different kinds of sub-areas and an increased number of sub-areas of a kind of sub-areas. This means that, as mentioned above, the number of different kinds of sub-areas and the number of sub-areas of a kind of sub-areas may depend on the complexity of the continuous area to be exposed.

It has been observed that it is advantageous in terms of structure quality to represent features, for example a region around a sharp corner and/or a region around a significant curvature (low radius of curvature), by a plurality of sub-areas having a dimension or dimensions that are small compared to a related dimension of the continuous area to be exposed.

Said plurality of sub-areas can be of the same kind or it can be of different kinds, for example of different kinds that are arranged in a manner that the dimension increases with increasing distance from the feature.

As pointed out above, the dimension of the sub-areas can be so small that the e-beam does not need to move for exposing the sub-area, for example. In other words, the exposure protocol can be configured in a manner, that the e-beam "hops" from one sub-area to the next one during exposure of the area to be exposed and that it does not move after a hop. More precisely, the exposure protocol can be configured in a manner that the e-beam is directed consecutively to a characteristic position of each sub-area, for example its center, wherein the e-beam is blocked (no exposure) during the hops and wherein the e-beam does not move between two hops.

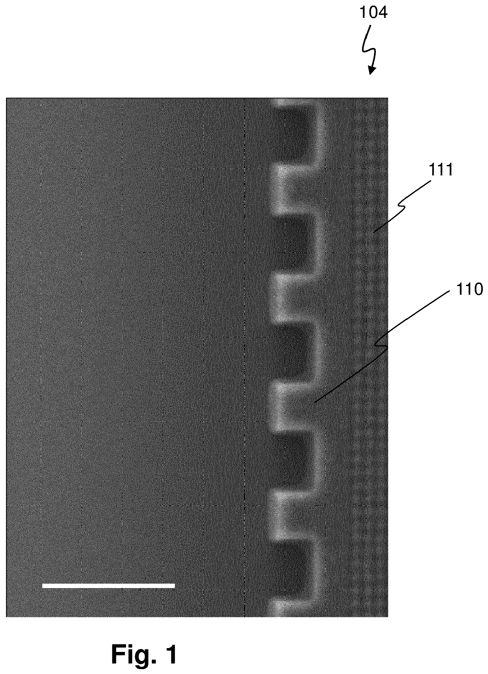

For example, the mask shown in Figure 1 has been fabricated in this manner. The sleeve region of the mask was "discretized" by squares having side lengths of 1 nm. The bulk region of the mask was discretized by squares having side lengths of 5 nm. Both, the sub-areas of the first kind having side lengths of 1 nm and the sub-areas of the second kind having side lengths of 5 nm were exposed by an e-beam that did not move except its movement (hopping) from one sub-area to the next one.

The number of different kinds of sub-areas, the number of sub-areas of a kind of sub-areas, the dimensions of the sub-areas of the different kinds of sub-areas and/or the shape of the sub-areas in general or of the sub-areas of the different kinds of sub-areas may depend on the concrete geometrical feature (e.g. sharp corner, contour portion having a significant curvature, counter portion having a moderate or no curvature) to be formed. This means that the number of different kinds of sub-areas, the number of sub-areas of a kind of sub-areas, the dimensions of the sub-areas of the different kinds of sub-areas and/or the shape of the sub-areas of the different kinds of sub-areas may be different for sharp corners of different kinds, for contour portions having different degrees of curvature and for sharp corners compared to bent contour portions.

Further, it has been observed that it is advantageous in terms of surface roughness and - to some degree at least - of the sharpness of continuous edges produced, to form all exterior portions of the area to be exposed by sub-areas having a dimension or dimensions that are small compared to a related dimension of the continuous area but optionally larger than a related dimension of sub-areas that represent sharp corners or contour portions with significant curvature. Very good results in terms of surface roughness have been observed when all exterior portions were formed by sub-areas having a size that render a movement of the e-beam for exposing a sub-area unnecessary. Regions of the area to be exposed that are interior regions only may be formed by sub-areas that are small compared to a related dimension of the interior region, for example so small that there is no need for moving the e-beam during exposure of a sub-area, or they may be formed by at least one sub-area having a dimension or dimensions that is/are in a size range that is comparable to the related dimension of the interior region.

A possible explanation for the above-discussed improvements of quality of the micro-/nano-structure produced is as follows:
It has been observed in Scanning Electron Microscopy (SEM) images and in Atom Force Microscopy (AFM) images that the mask fabricated during the method according to the invention is of improved quality compared to masks fabricated during state-of-the-art e-beam fabrication methods. More precisely, the mask fabricated during the method according to the invention has a through opening having a cross-section in a plane parallel to the original surface of the resist layer that represents the shape to be exposed in a more accurate manner or the mask fabricated during the method according to the invention comprises a covering (shielding, protecting) region having a cross-section in a plane parallel to the original surface of the resist layer that represents the shape to be exposed in a more accurate manner.

Further, it has been observed that the surfaces of the through opening or - as the case may be - of the covering region that are arranged normal or predominantly normal to the original surface of the resist layer are smother, this means have an improved surface roughness.

It is assumed that overshooting of the e-beam is suppressed, or less dominant at least, if the distance between points at which the e-beam changes its direction is below a critical length. If this is the case, one can imagine that the advantages of the method according to the invention can also be triggered or even enhanced by adapting the propagation velocity of the e-beam on the surface of the resist layer and/or by adapting the beam current, for example. More precisely, said propagation velocity and/or beam current may be reduced in corner regions and/or in regions that are adjacent to portions of the contour that are bent. In analogy to the above-described adaption of the dimension of different kinds of sub-areas, the higher the curvature of the contour portion is the more may the propagation velocity and/or beam current be reduced. However, state-of-the-art e-beam facilities provide Proximity error correction (PEC) for optimizing the dosage distribution on the resist layer. It is a surprising finding of the invention that the additional use of sub-areas as proposed is able to increase the quality of the fabricated mask significantly.

Further, it is assumed that the dose distribution is more homogeneous if the area that is exposed in an individual exposure is below a critical area, for example below an area that can be exposed without movement or with little movement the e-beam. For example, said area can be below 25 nm², 16 nm², or 9 nm². It can be around 10, 9, 6, 4, 2 or 1 nm², in particular in the cases of areas that are square or square-like. It has been observed in SEM images that the surface roughness of surfaces areas of the mask that have been exposed in a sequence of small sized areas is significantly reduced compared to surface areas of the mask that have been exposed as a larger sized area.

It is known that the surface roughness of surfaces of the mask, said surfaces being arranged perpendicular to the mask plane (i.e. perpendicular to original resist layer) is transferred to surface roughness of surfaces of the fabricated structure that are arranged perpendicular to the original device layer (which is usually perpendicular to the mask plane and to the original resist layer). In other words, surface roughness of the mask is transferred to surface roughness of the structure fabricated into the device layer(s) or on top of the device layer(s).

In particular, the transfer of surface roughness is exceptionally pronounced if dry etching with a high share of physical dry etching is used to transfer the shape of the mask to the device layer.

Many devices, in particular optical devices, comprise micro- and/or nano-structures of a material that is chemically inert, or inert with respect to gases and/or fluids usually used for etching. Therefore, the micro- and/or nano-structure have to be fabricated by physical etching. Electro-optic materials, such as lithium niobate (LiNbO₃), barium titanate (BaTiO₃), potassium niobate (KNbO₃) and other perovskite materials in the form of ABO3, wherein A and B are different chemicals and different from oxygen O, are examples of such inert materials. This means that devices, in particular optical devices, that comprise micro- and/or nanostructures of a material that is chemically inert in the sense given above and that are fabricated with state-of-the-art e-beam fabrication methods are not only limited in the smallest feature size that can be fabricated but also in the roughness of the surface. The latter leads to increased scattering, for example.

The advantages of the fabrication method according to the invention have been used to fabricate an integrated multichannel tunable filter. The filter comprises Bragg gratings and is tunable from the visible to the short-wave infrared light (390-3000 nm). Tunability is achieved by the Bragg grating being formed by an electro-optic material, namely LiNbO₃, that is arranged on an isolator. Such a device could not be fabricated so far, at least not in a manner that allows for commercialization, for example due to insufficient performance and/or due to the mandatory use of fabrication methods that are too resource intense, because the structures needed for the Bragg grating being active in the visible wavelength range could not be fabricated in the quality needed and because overall surface roughness was too high. The latter causes losses that are inacceptable for a commercial device.

Details of the integrated multichannel tunable filter are given further below.

It has been observed that the advantages discussed above, in particular minimal feature size, quality of edges and corners and surface roughness, can become even further pronounced if the area to be exposed or the sub-areas representing the contour of the shape to be exposed or the sub-areas representing portions of the contour of the shape to be exposed that need to be fabricated with high quality is/are exposed several times, this means more than once.

It goes without saying that other operating parameters, such as the dose, may be adapted to ensure that the total exposure is still optimal for the resist layer or resist layer(s) used.

It is assumed that the additional benefit caused by exposing the area to be exposed or a portion of it, in particular portions representing the contour of the shape to be exposed or portions representing portions of the contour of the shape that need to be fabricated with high quality, is at least partly due to the time that passes between two subsequent exposures of a sub-area. During this time, the charge density in the resist layer(s) can become more homogeneous, at least in the volume exposed via said sub-area. Further, it is assumed that discharging effects may take place.

In an embodiment the exposure protocol is configured to control the e-beam facility in a manner that at least a portion of the plurality of sub-areas is exposed several times, this means at least twice.

In other words, multi-path lithography may be used for at least a portion of the plurality of sub-areas.

For example, the portion of the plurality of sub-areas that forms the contour of the shape to be exposed is exposed several times.

It is a further advantage of the method according to the invention that the method is able to fabricate high quality micro- and nano-structures when one resist layer is provided only and/or when no conductive or semi-conductive layer is in contact with the at least one device layer and the at least one resist layer. In particular, the following embodiments lead surprisingly to high-quality micro- and nano-structures:
- The provided layered structure comprises one resist layer only.
- The provided layered structure comprises no conductive or semi-conductive layer at one of the following position or at a plurality of the following positions or at all of the following positions:
   ∘ On top of the resist layer (of the top-most resist layer, as the case may be).
   ∘ Between resist layers, if more than one resist layer is present.
   ∘ Between a resist layer (the bottom-most resist layer, as the case may be) and the device layer (the top-most resist layer, as the case may be).
   ∘ Between device layers, if more than one device layer is present.
   ∘ Between the device layer (the bottom-most device layer, as the case may be) and a base of the device layer. The base of the device layer is in direct contact with the device layer or in direct contact with the bottom-most device layer, as the case may be. It can be a further layer or a substrate, for example.
- The resist layer(s), the device layer(s) and/or its base are neither conductive nor semi-conductive. However, the base itself can be supported by a substrate being conductive or semi-conductive. A device layer or device layers arranged on top of a SiO₂-layer (corresponding to the base) on a Si- or metallic substrate is an example for such a configuration.

In an embodiment, the layered structure comprises at least one device layer, wherein the layered structure is arranged on a base that is neither conductive nor semi-conductive, wherein the layered structure does not comprise any conductive or semi-conductive layer and wherein the area of the surface of the layered structure that is exposed is given by a bare surface portion of the resist layer.

As mentioned above, the base itself may be supported by a substrate that is conductive or semi-conductive.

As mentioned above, such configurations are mandatorily for the fabrication of many optical devices comprising micro- and/or nanostructures. Hence, the claimed method is in particular suitable for the production of optical devices.

It has been observed, that the advantages of the method can be achieved even without operating parameters that depend on the kind of sub-areas.

Hence, the electron beam characteristics are not altered for the plurality of areas, in an embodiment.

In other words, the e-beam characteristics can be kept constant during the whole e-beam exposure.

In an embodiment, the method comprises further:
- A step of producing a mask by developing the resist layer. The resist layer can be developed in a manner that the resist layer is removed except in a region having the shape of the continuous area to be exposed in a plane parallel to the original surface of the layered structure or in a manner that the resist layer comprises a through opening having the shape of the continuous area to be exposed in a plane parallel to the original surface of the layered structure.
   As a rule, the continuous area to be exposed corresponds to the area exposed prior to the step of producing the mask.
   The mask may comprise further regions that are not removed or that are removed. These further regions may serve as position and/or alignment markers, for example.
- A step of transferring the mask to a device layer. Thereby, the device layer becomes a device layer comprising a structure having the shape of the continuous area to be exposed or its negative in a plane parallel to the original surface of the device layer. In other words, a structured device layer is fabricated.
   As a rule, the continuous area to be exposed corresponds to the area exposed prior to the step of transferring the mask.
   The device layer may comprise the structure or its negative by being processed by a removing (in particular etching) or an additive process (for example deposition).
   In a preferred embodiment, it is a removing process that is used in the step of transferring the mask to the device layer, in particular dry etching, in particular physical dry etching or dry etching with a relevant or predominant share of physical dry etching. This is because the advantage of reduced surface roughness of the fabricated structure is pronounced if the method according to the invention is used in combination with physical dry etching, as discussed above.

As mentioned above, the method according to the invention is in particular suitable for the fabrication of optical devices, in particular integrated optical devices, that can be tuned by the use of an electro-optic effect. However, such devices need regions in which a tunable electrical field can be applied to an electro-optic material of the device. Hence, the device needs elements for generating said tunable electrical field - in particular in embodiments in which there is conductive or semi-conductive layer in a structured functional region of the device - in particular in a region that is structured to have specific optical properties.

In an embodiment, in particular in an embodiment that comprises the above discussed steps of producing a mask by developing the resist layer and of transferring the mask to a device layer, the method comprises a step of providing a conductive element. The conductive element is provided relative to the structure of the device layer or device layers in a manner that a voltage and/or a current applied to the conductive element influences the physical properties of the structure.

In this embodiment, the structure is usually a structure for generating a specific optical property. For example, the structure may be or comprise at least one of a waveguide, a rib of a waveguide, a strip of a waveguide, a grating, a focusing structure, a coupling structure, and a scattering structure.

The structure may be of any material suitable for optical elements. In particular, it may be of any tunable material suitable for optical elements, such as an electro-optic material, for example a ferro-electric material.

The step of providing the conductive element can comprise the sub-steps of:
- Providing a photoresist layer on top of the layer comprising the structure.
   More than one photoresist layer may be provided. In particular, a bilayer of photoresists may be provided.
   The at least one photoresist layer may be a positive or negative photoresist.
- Exposing an area of the photoresist layer to electromagnetic radiation, wherein the exposed area corresponds to a footprint of the conductive element or its negative.
   The photoresist layer may be exposed by photolithography, for example direct laser lithography (also called direct laser writing).

According to state-of-the-art fabrication methods of integral devices that comprise structures fabricated by e-beam lithography, the footprint of any conductive element that is configured to tune properties of integral devices is written into a resist by use of e-beam, too.

State-of-the-art photolithography and direct laser writing are more mass production friendly than e-beam lithography. However, it was assumed so far, that the needed position and alignment accuracy of any conductive region configured to tune properties, in particular optical properties, of an integral device, in particular an integral device having structures that have to be fabricated by e-beam lithography, cannot be achieved by photolithography or direct laser writing.

This assumption was based on the knowledge that photolithography and direct laser writing are per se less precise than e-beam lithography and on the knowledge, that the combination of two fabrication methods that use different positioning and alignment routines effect adversely the arrangement of an element (structure) fabricated by a first fabrication method (e-beam lithography in the given case) relative to an element (structure) fabricated by a second fabrication method (photolithography or direct laser writing in the given case).

However, it has been found that is possible to combine e-beam lithography and photolithography/direct laser writing, at least for fabricating a structure configured to tune at least one of its optical properties by use of an electro-optic effect and for fabricating the related pads configured to tune said at least one optical property.

It is key to provide position and/or alignment markers if a first structure of an integral device is fabricated by e-beam lithography and a second structure of the integral device is fabricated by photolithography, such as direct laser writing.

In an embodiment, in particular in an embodiment comprising the steps of producing a mask by developing the resist layer (i.e. the resist layer of the e-beam lithography), transferring the mask to a device layer and providing the conductive element by photolithography, in particular direct laser writing, the method comprises the steps of:
- Providing at least one position and/or alignment marker in the exposure protocol, wherein the mask comprises further the position and/or alignment marker and wherein the position and/or alignment marker are transferred to the device layer, in particular during the step of transferring the mask to the device layer.
- Aligning the device layer comprising the structure in a tool configured to expose the area of the photoresist layer, wherein the position and/or alignment marker is used during alignment.
   As mentioned above, the device layer may comprise the structure as integral part or as a structure added to the device layer.
   The area of the photoresist layer that is exposed is the area that corresponds to the footprint of the conductive element or its negative.

The position and/or alignment marker may be a cross, for example.

Usually, there are a plurality of position and/or alignment markers provided.

The method, in particular if used for the fabrication of optical devices, such as integral tunable optical devices, can comprise at least one of the following steps:
- Providing, for example depositing, the conductive elements subsequent to a step of developing the exposed photoresist layer.
- Providing, for example depositing, a thin conductive layer subsequent to a step of developing the photoresist layer. In this case, the body of the conductive element configured for tuning is fabricated by electro-plating after lift-off of the photoresist layer.
   In particular, the conductive layer deposited prior to lift-off of the photoresist layer has a thickness (height) that is significantly smaller than the thickness of the photoresist layer, for example half the thickness of the photoresist layer or less.
   The thin conductive layer deposited prior to lift-off of the photoresist layer may be seed layer only. In this case, the conductive layer may have a thickness of 20 nm or less, or a thickness of 10 nm or less. For example, the thickness of the conductive layer may be between 5 and 10 nm.
   The advantage of fabricating the conductive element in this manner is that the height of the conductive element is not restricted by the height of the photoresist layer. This makes it possible to produces higher tuning pads, for example. Higher tuning pads are important for the tuning behavior of a structure that is oriented along a normal of the device layer, such as a waveguide or an element of a waveguide, for example a rib of a rib waveguide or a strip of a strip waveguide.
   The height of the conductive elements produced can be between 300 nm and 2 µm, for example. The height can be adjusted to a height of the structure to be tuned via the conductive elements. In particular, the height of the conductive elements can be equal or larger than the height of said structure.
- Fabricating contact openings for the conductive elements into a cladding that is arranged on top of the functional structures of the device, wherein photolithography, such as direct laser writing, is used for fabricating the contact openings.

In an embodiment, the method is configured to fabricate a device comprising a waveguide, for example a rib waveguide or a strip waveguide (i.e. no thin-film contribution to waveguiding).

Hence, the shape of the continuous area to be exposed can comprise or be the footprint of a waveguide, such as the strip of a strip waveguide, or a portion of the waveguide, such as the rib of a rib waveguide.

In an embodiment, the continuous area to be exposed is the footprint of a rib of a rib waveguide.

The advantage of a reduced surface roughness becomes very evident in the case of the structure fabricated by the method being a waveguide or a portion thereof. This is because the reduced surface roughness of the lateral walls at least reduces significantly the propagation losses of an electromagnetic wave guided by the waveguide.

The shape of the continuous area to be exposed may optionally comprise a periodic structure arranged into the footprint of the waveguide or into the footprint of the portion thereof, or arranged at a lateral side of the footprint of the waveguide or at a lateral side of the footprint of the portion thereof.

The periodic structure may be arranged along a longitudinal axis of the footprint of the waveguide or the portion thereof. As a rule, said longitudinal axis is parallel to a propagation direction of an electromagnetic wave guided by the waveguide.

The periodic structure may be restricted to a portion of the footprint of the waveguide or of the footprint of the portion thereof.

There may be a plurality of periodic structures that are arranged along the footprint of the waveguide or along the footprint of the portion thereof, in particular along a longitudinal axis of the waveguide or of the portion thereof.

The area to be exposed may comprise a plurality of continuous areas comprising the footprint of a waveguide or the footprint of a portion thereof. In this case, the total area to be exposed may or may not be continuous.

At least two of the plurality footprints may comprise a periodic structure or periodic structures of the kind described above.

The periodic structures of a footprint and/or of different footprints may differ in their periodicity.

The periodic structure may be a grating, such as a Bragg grating.

The periodic structures may be Bragg gratings that differ in a grating parameter.

The periodic structure may comprise a sequence of a basic geometric shape, such as rectangles, triangles or semi-spheres.

In an embodiment, the device layer is made of a non-conductive and non-semiconductive material, in particular an electro-optic material, for example a ferro-electric material.

In an embodiment, the device layer is an electro-optic layer, in particular a ferro-electric layer, such as a Lithium niobate (LiNbO₃), Barium titanate (BaTiO₃) or Potassium niobate (KNbO₃).

As a rule, the electro-optic layer is a crystalline layer to provide good tuning properties.

The electro-optic layer may have a thickness between 100 and 1500 nm, in particular between 200 and 1000 nm, for example between 300 and 900 nm, such as 400, 500, 600, 700 or 800 nm.

The electro-optic layer may be provided as a layer of a commercially available wafer. The electro-optic layer may be arranged directly on top of a Silicon dioxide layer. The Silicon dioxide layer may be provided directly on top of Silicon substrate.

In an embodiment, the electro-optic layer is a Lithium niobate layer (LiNbO₃). The Lithium niobate layer may have a thickness as given above.

As pointed out above, a second aspect of the invention concerns optical devices that cannot be fabricated in a commercially useful manner without using the fabrication method according to the invention.

As pointed out above, the method according to the invention is in particular suitable for the fabrication of optical waveguides due the achieved surface roughness and hence due to the achieved reduction of optical losses of a guided wave.

Therefore, the invention concerns also an optical device comprising a waveguide, wherein the surface roughness of a lateral wall of the waveguide is below 5 nm, in particular below 4, 3, 2 or 1 nm.

In many embodiments, the surface roughness is below 2 nm, for example below 1 nm.

The surface roughness can be given as RMS roughness.

To the best of our knowledge, a surface roughness of this size could not be fabricated so far in an e-beam process for perovskite materials in the form of ABO₃, wherein A and B are different chemicals and different from oxygen O, so far.

Hence, the waveguide, or at least a portion of it, comprises or preferably consists of perovskite material, for example of lithium niobate (LiNbO₃), barium titanate (BaTiO₃) or potassium niobate (KNbO₃).

In an embodiment, the waveguide is a rib waveguide or a strip waveguide. If the waveguide is a rib waveguide or a strip waveguide, a lateral wall of the rib or strip is below 5 nm, in particular below 4, 3, 2 or 1 nm.

The waveguide being a rib waveguide means that the waveguide comprises a guiding layer having a rib (protrusion) that is integral with the guiding layer. This means the following if the wording of the method is used: The waveguide comprises a guiding layer that is formed by the device layer having a structure etched out of it, wherein the structure is a rib (protrusion) configured to confine a propagating electromagnetic wave in an in-plane direction that is perpendicular to the propagation direction.

In an embodiment, the optical device comprises a filter element, wherein the filter element comprises a periodic structure arranged at one lateral wall of the waveguide, at least.

In this embodiment, the elements forming the periodic structure are arranged in sequence parallel to a longitudinal axis of the waveguide, this means parallel to the propagation direction of the waveguide.

The periodic structure can be arranged at both sides of the waveguide. In particular, the waveguide can have a shape having a mirror symmetry with respect to its middle plane, that may be a middle plane of the rib or strip, said middle plane comprising the central longitudinal axis of the waveguide and being oriented perpendicular to the guiding layer.

Preferably, the periodic structure forms a Bragg grating.

The Bragg grating can be a uniform Bragg grating.

However, the Bragg grating has in many embodiments a more specific grating profile. For example, the Bragg grating can be Gaussian apodized, Raised-cosine apodized, chirped, or discrete phase shifted.

The Bragg grating can comprise a superstructure.

In an embodiment, the Bragg grating comprises a superstructure having a cavity.

The cavity can be arranged in the middle of the Bragg grating. In this embodiment, the Bragg grating may be considered as a kind of Fabry-Pérot interferometer, wherein the portions of the Bragg grating being arranged at each side of the cavity along the propagation direction replace the reflecting surfaces.

In an embodiment, the filter element comprises a plurality of Bragg gratings along the propagation direction. A Bragg grating of the plurality of Bragg gratings is also called a grating unit cell, in the following.

In particular, the filter element can comprise a plurality of the Bragg gratings having the above-discusses superstructure.

In an embodiment, the optical device is an electro-optic device, for example a ferro-electric, device.

In particular, the waveguide can be made of an electro-optic, for example a ferro-electric material, in particular of perovskite material, such as a Lithium niobate (LiNbO₃), Barium titanate (BaTiO₃) or Potassium niobate (KNbO₃).

In an embodiment, the optical device comprises a filter element having a periodic structure arranged at at least one lateral wall of the waveguide, wherein the waveguide is made of an electro-optic material.

The electro-optic device (the ferro-electric device, as the case may be) can comprise electrodes for tuning the refractive index of the waveguide, in particular of the rib or strip, via an applied DC or AC voltage.

As a rule, the electro-optic (ferro-electric) device is an on-chip device. This means that all elements of the device are arranged integrally on a single chip (substrate).

In an embodiment, the optical device is an integrated electro-optic (ferro-electric, as the case may be) device, wherein the device comprises on a single chip a first channel and a second channel that is connected in parallel to the first channel. The first channel comprises a first filter element according to any embodiment of the above-disclosed embodiments and the second channel comprises a second filter element according to any embodiment of the above-disclosed embodiments.

In particular, the first filter element comprises a first periodic structure and the second filter element comprises a second periodic structure, wherein a refractive index of the periodic structures is tunable by use of an electro-optic effect.

In a preferred embodiment, the first channel is configured to process light in the visible wavelength range (around 390-780 nm). This means that all optical elements of the first channel, such as the waveguide forming the basic element of first channel and the first filter element, are optimized for the visible wavelength range or a portion thereof.

In particular, the first periodic structure may be configured to process light in the visible wavelength range by having a periodicity below 250 nm.

The second channel can be configured to process light in the near infrared wavelength range (around 780-1300 nm). This means that all optical elements of the second channel, such as the waveguide forming the basic element of the second channel and the second filter element, are optimized for the near infrared wavelength range or a portion thereof.

In an embodiment, the integrated electro-optic (ferro-electric, as the case may be) device comprises on the single chip a third channel connected in parallel to the first and second channels.

The third channel can comprise a third filter element according to any embodiment of the above-discloses embodiments.

The third filter element can comprise a third periodic structure, wherein a refractive index of the third periodic structure is tunable by use of an electro-optic effect.

The third channel can be configured to process light in the short-wave infrared wavelength range (around 1300-3000 nm). This means that all optical elements of the third channel, such as the waveguide forming the basic element of the third channel and the third filter element, are optimized for the short-wave infrared wavelength range or a portion thereof.

The integrated electro-optic (ferro-electric, as the case may be) device may comprise further channels that are configured to process electromagnetic waves of further wavelength ranges and/or narrower wavelength ranges compared to the wavelength ranges given above in relation to the first to third channels.

The first, second (if present), third (if present) and/or further (if present) channel may be configured to process electromagnetic waves of narrower wavelength ranges than given exemplarily above.

The periodic structures may differ in at least one of their periodicities, the dimensions of the elements forming the periodic structures and the shape of the elements forming the periodic structures.

As pointed out above, the periodic structures form Bragg gratings in a preferred embodiment. In this embodiment, the Bragg gratings of the different channels, but also the Bragg gratings of the same channel if a channel comprises a plurality of Bragg gratings, may differ in the grating period.

In an embodiment, the integrated electro-optic (ferro-electric, as the case may be) device according to any embodiment disclosed above can comprise at least one of the following elements:
- A multimode interference coupler (MMI) configured to direct incident light to different channels in dependence of a voltage applied to the MMI.
- A Mach-Zehnder Interferometer (MZI) arranged in at least one of the at least one channels.
   The MZI may be tunable by applying a voltage to it.
- A broadband directional coupler (BDC) to direct light to different elements of a channel, for example to the MZI or the filter element.

In many embodiments, the MMI, MZI and BDC - if present - are tunable by comprising an element made of an electro-optic material (ferro-electric material, as the case may be), in particular of the electro-optic (ferro-electric) material of the waveguide. Said element may be or comprise a portion of the waveguide, for example its rib or strip or a portion thereof.

Exemplarily embodiments of the invention are shown in the following figures. In the figures, the same reference symbol is used for identical or comparable elements. It shows:
- **Figure 1**: an SEM image of a portion of a mask for fabricating a rib waveguide comprising a Bragg grating;
- **Figure 2**: a schematic of an embodiment of a method according to the invention, wherein the method shown can be used exemplarily for the production of a rib waveguide comprising a tunable Bragg grating;
- **Figure 3**: a schematic of an embodiment of a method according to the invention comprising a plurality of optional steps;
- **Figure 4**: a schematic of an embodiment of a method according to the invention comprising even further optional steps; and
- **Figure 5-8**: an optical device, namely an integrated multichannel tunable filter, fabricated with a method according to the invention.

**Figure 1** shows an SEM image of a portion of a mask 104 for fabricating a waveguide 1, more precisely a rib waveguide, comprising a Bragg grating 2 as a proof of concept.

Figure 1 shows that the sleeve region 110 of the mask 104 has a significantly reduced surface roughness compared to a bulk region 111. The sleeve region 110 was exposed by use of a plurality of sub-areas 5 of a first kind that sum up to the sleeve region whereas the bulk region 110 was produced according to the state of the art, this means by exposing it as a single area. The single area is an area 6 of the second kind according to the invention.

The white bar given at the bottom of Figure 1 represents 50 µm.

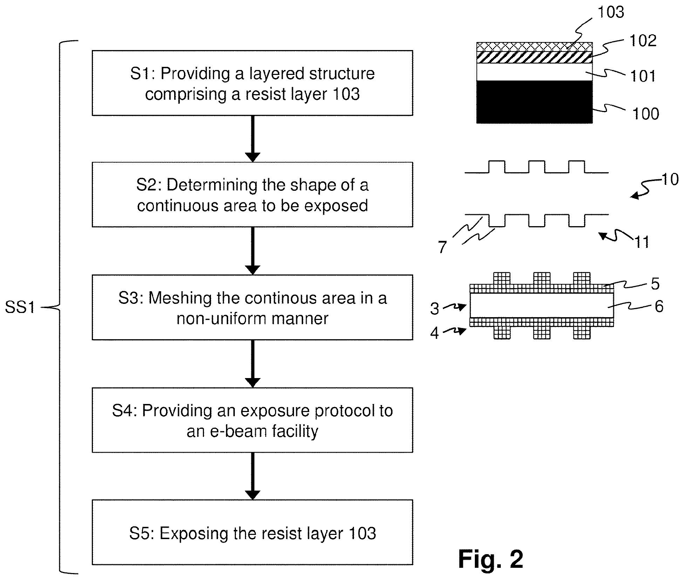

More details concerning the used non-uniform meshing for producing the mask 104 are given with respect to Figure 2, for example.

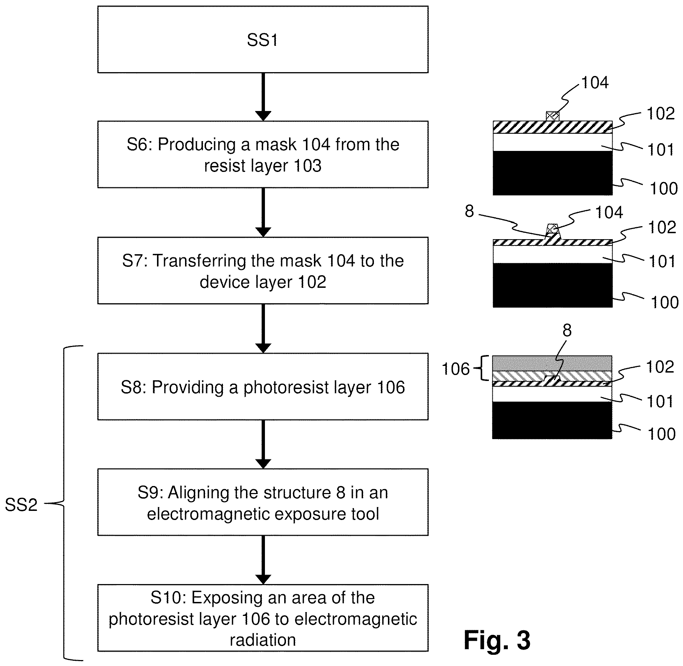

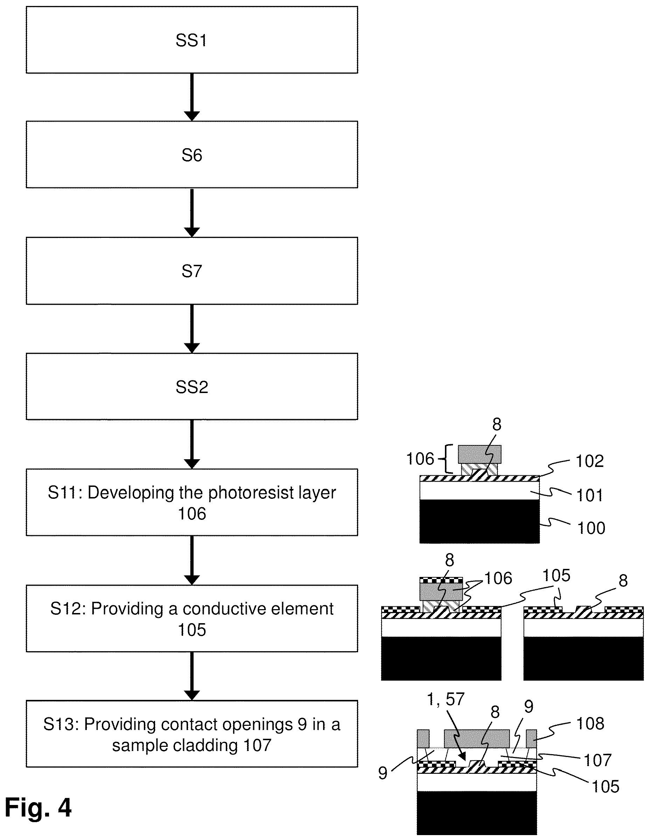

**Figure 2** shows a schematic of an embodiment of the method according to the invention by comprising a first set SS1 of steps. In Figure 2 (and also in Figures 3 and 4) the method is disclosed with respect to an exemplary fabrication of a rib waveguide 1 comprising a tunable Bragg grating 2. However, the method is not restricted to the production of a rib waveguide or a rib waveguide comprising a tunable Bragg grating. All feature related to the exemplary fabrication of a rib waveguide comprising a tunable Bragg grating are optional.

The embodiment shown comprises the following steps:
- A step S1 of providing a layered structure comprising only one resist layer 103 on top of a device layer 102.
   In the embodiment shown, the device layer 102 is a crystalline lithium niobate (LiNbO₃) layer of around 1 µm thickness arranged directly on top of a Silicon dioxide (SiO₂) layer 101 of around 2 µm thickness. The layer 101 on which the device layer 102 is arranged in a direct manner is also called the base 101 of the device layer 102. The SiO₂ layer 101 is arranged directly on top of a Silicon substrate 100 with a thickness of several hundred micrometers.
- A step S2 of determining the shape of a continuous area to be exposed.
   In other words, the footprint 10 of the mask 104 and hence of the structure 8 produced in subsequent steps is determined.
   In the exemplary fabrication of a rib waveguide 1 comprising a tunable Bragg grating 2, the shape of the continuous area to be exposed is the footprint 10 of the rib of the waveguide, said footprint comprising periodic projections 11 on the lateral sides, this means on the sides arranged parallel to the longitudinal axis of the footprint 10.
   The shape to be exposed can be considered as being formed by its contour 7 and the continuous area delimited by the contour 7.
- A step S3 of meshing the continuous area in a non-uniform manner. This means that a sub-area 5 of a first kind and a sub-area 6 of a second kind is determined. The sub-area 5 of the first kind is smaller in size than the sub-area 6 of the second kind.
   The sub-area 5 of the first kind and the sub-area 6 of the second kind are chosen to reproduce the shape to be exposed in an accurate manner when a plurality of sub-areas 5 of the first kind are arranged in regions of the shape to be exposed that contribute to the contour 7, and optionally in regions that are close to the contour 7, and when at least one sub-area 6 of the second kind is arranged in the interior of the shape to be exposed.
   The regions of the shape to be exposed that contribute to the contour 7 and the regions that are close to the contour 7 form the sleeve region 4 of the shape, whereas the regions spaced from the contour 7 form the bulk region 3.
   The shape to be exposed is reproduced in an accurate manner if areas not covered by a sub-area and areas covered in addition to the continuous area are negligible.
- A step S4 of providing an exposure protocol to an e-beam facility. This means that a sequence of commands is provided to the e-beam facility, said sequence of commands cause the e-beam facility to pattern the shape to be exposed in a manner designed by an operator. Said manner comprises the consecutive exposure of the sub-areas 5 of the first kind and the sub-area(s) 6 of the second kind.
- A step S5 of exposing the layered structure, in particular the resist layer 103, according to the exposure protocol.
   In a preferred embodiment, the resist layer 103 is exposed several times, in particular two times, according to the exposure protocol.

The first set SS1 of steps comprises with the steps S1-S5 the main steps of producing a high-quality mask. Steps such as a step S6 of developing the exposed resist layer 103 or cleaning steps are examples of further step comprised by the first set SS1 of steps directed towards the fabrication of a high-quality mask.

**Figure 3** shows a schematic of an embodiment of the method comprising a plurality of optional steps that are in addition to the first set SS1 of steps disclosed with respect to Figure 2.

One of these additional steps is the step S6 of producing a mask 104 from the exposed resist layer 103.

In other words, the exposed resist layer 103 is developed.

The mask 104 can be produced by the use of commercially available developers and state-of-the-art development procedures.

In the embodiment shown, the resist layer 103 is a negative resist and the fabricated mask 104 covers portions of the device layer 102 that must not be processed in the following steps.

Another one of these additional steps is a step S7 of transferring the mask to the device layer 102, this means for producing the structure 8 in or on the device layer 102.

In the embodiment shown, the mask 104 is transferred to the device layer 102 by physical dry etching. More precisely, inductively coupled plasma reactive ion etching (ICP-RIE) with argon ions (Ar⁺) is used to transfer the mask 104 to the device layer 102 in a manner that the high quality of the mask in terms of surface roughness and sharpness of edges and corners results in a corresponding high-quality of the structure 8 fabricated in the device layer 102.

There may be further optional steps usually used during the production of the mask 104 or the structure 8, such as a step of removing residual resist and/or a cleaning step.

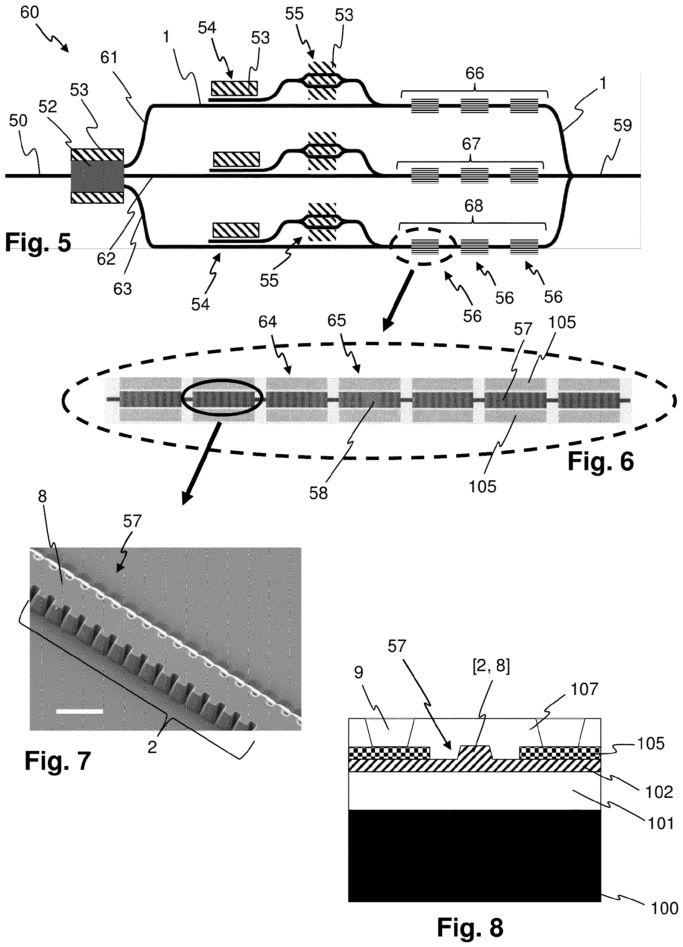

The further optional steps shown in Figure 3 can be subsumed under a second set SS2 of steps comprising the steps for exposing a photoresist layer (a bilayer 106 of photoresist in the exemplary embodiment shown) for the later fabrication of conductive elements 105, such as electrodes, pads etc. In the embodiment shown, the second set SS2 of steps comprises:
- A step S8 of providing the photoresist bilayer 106 directly on top of the structured device layer 102.
   The photoresist bilayer as well as other resist layers used during the method, such as the resist layer 103 or a photoresist layer 108 used during the fabrication of contact openings (see below for details) can be provided by state-of-the-art techniques such as spin-coating. The state-of-the-art techniques usually comprises at least one dehydration and at least one post-bake step. Any step of providing a resist or photoresist layer may further comprise a surface treatment step for improving adhesion.
   In the embodiment shown, the photoresist bilayer 106 is a negative photoresist bilayer (Figure 4).
- A step S9 of aligning the device in its current state in a tool configured to expose the photoresist bilayer 106.
   In the embodiment of the method used for fabricating the rib waveguide 1 and the integrated multichannel tunable filter 60 shown in Figures 5-8, an arrangement of crosses arranged on the device layer 102 was used. The crosses were written in the resist layer 103 and transferred to the device layer 102 at the same time as the structure 8 was etched into the device layer 102.
   An alignment precision of at least 0.001 mrad was achieved by this approach.
- A step S10 of exposing the photoresist bilayer 106 in regions that are arranged on top of regions on the device layer 102 or on top of the base 101 that shall finally support the conductive elements 105.
   In the embodiment of the method used for fabricating the rib waveguide 1 and the integrated multichannel tunable filter 60 shown in Figures 5-8, direct laser lithography was used.

**Figure 4** shows a schematic of an embodiment of the method comprising even further optional steps in addition to the first set SS1 of steps disclosed with respect to Figure 2 as well as the step S6 of producing the mask 104, the step S7 of transferring the mask 104 and the second set SS2 of steps disclosed with respect to Figure 3.

The further optional steps concern the fabrication of the conductive elements 105, said fabrication being initiated by the steps of the second set SS2 of steps, and concern further the fabrication of contact openings 9 in cases in which the device comprises a sample cladding 107.

The further optional steps disclosed in Figure 4 are:
- A step S11 of developing the photoresist bilayer 106.
   The photoresist bilayer 106 can be developed by the use of commercially available developers and state-of-the-art development procedures.
- A step S12 of providing the conductive element 105 by depositing a metallic layer on the device at its present state. This means, the metallic layer is deposited on the bilayer photoresist 106 in regions that still comprise photoresist after the step S11 of developing the photoresist bilayer 106 and on the device layer 102 in regions in which the photoresist bilayer 106 was removed during the step S11 of developing the photoresist bilayer 106.
   The metallic material deposited can be any material usually used for producing contacts, pads etc., for example gold.
   The step S12 of providing the conductive element 105 can comprises a sub-step of removing the residual bilayer photoresist 106 and the portions of the metallic layer arranged on top of it. This sub-step is also called metal lift-off.
   In the embodiment of the method used for fabricating the rib waveguide 1 comprising the tunable Bragg grating 2 and the integrated multichannel tunable filter 60 shown in Figures 5-8, a 1.5 µm thick gold layer was deposited on top of a thin adhesion layer of around 2 nm thickness. The adhesion layer was a titanium layer. An adhesion layer of another material, for example chromium, is conceivable.
- In cases in which the device comprises a sample cladding 107 that was deposited on top of the structure 8 and the conductive elements 105, the method can comprise a step S13 of providing contact openings 9 in the sample cladding 107.
   The contact openings 9 can be provided by using steps that are similar to the set SS2 of steps used for exposing a photoresist layer for the later fabrication of conductive elements 105 and the subsequent step S11 of developing the photoresist layer. More precisely, the step S13 of providing contact openings 9 can comprise the following sub-steps:
   ∘ Providing a photoresist layer 108. The photoresist layer can be provided as disclosed with respect to the resist layer 103 and the photoresist bilayer 106.
   ∘ Aligning the device in a tool configured to expose an area of the photoresist layer 108, said area being arranged on top of the later contact openings 109 or said area covering the whole device except regions arranged on top of the later contact openings 109.
      The alignment can be carried out as disclosed with respect to the fabrication of the conductive elements 105.
   ∘ Exposing the photoresist layer 108. In the exemplary embodiment shown, direct laser lithography is used for exposing the photoresist layer 108.
      Alternatively, the photoresist layer can be exposed by state-of-the art photolithography.
   ∘ Developing the exposed photoresist layer 108. The photoresist layer 108 can be developed as disclosed with respect to the resist layer 103 and the photoresist bilayer 106.
   ∘ Transferring the developed photoresist layer 108 to the sample cladding 107.
      Transferring can be carried out as disclosed with respect to the fabrication of the structure 8 in or on the device layer 102 and with respect to the fabrication of the conductive elements 105.
      However, wet etching, in particular selective (cladding) wet-etching can be used for transferring the developed photoresist layer 108 to the sample cladding 107.
      In the embodiment of the method used for fabricating the rib waveguide 1 and the integrated multichannel tunable filter 60 shown in Figures 5-8, the cladding is Silicon dioxide (SiO₂) and buffered HF was used to etch the cladding layer 107.
   ∘ Removing the residual photoresist layer 108. The photoresist layer 108 can be removed as disclosed with respect to the resist layer 103 and the photoresist bilayer 106

**Figures 5-8** show an integrated multichannel tunable filter 60 that could not be fabricated so far, at least not in a manner that allows for commercialization. The method as disclosed with respect to Figure 4 (that refers back to Figures 2 and 3) was used to fabricate said filter 60, in particular to fabricate the rib waveguide 1 and a rib waveguide portion 57 comprising the Bragg grating 2 arranged at the lateral wall of the rib 8.

Details of the Bragg gratings 2 comprised by the integrated multichannel tunable filter 60 are shown in Figures 6-8.

**Figure 5** shows the overall layout of the integrated multichannel tunable filter 60.

The core of the filter 60 and the structure that could not be fabricated so far, at least not in a manner that allows for commercialization, is the grating unit cell 56 of the Bragg grating 2, in particular the grating unit cell 56 configured to filter light in the visible, in particular the short-wavelength visible, wavelength range.

All optical elements of the filter 60 as well as all conductive elements 53 (electrodes, pads) used for tuning are arranged on a single chip. In other words, the filter 60 is an on-chip device.

In the embodiment shown, the single chip is formed by the wafer described above. A multitude of integrated multichannel tunable filter 60 can be fabricated on a wafer and sliced into single on-chip filters.

The filter 60 of the embodiment shown in Figure 5 comprises on the single chip the following elements:
- An optical input 50, in particular a single optical input, for example given by a multimode optical fiber.
- Three channels connected in parallel. A first channel 61 is configured to process light in the visible wavelength range, this means in the range of around 390-780 nm. A second channel 62 is configured to process light in the near infrared wavelength range, this means in the range of around 780-1300 nm. A third channel 63 is configured to process light in the short-wave infrared wavelength range, this means in the range of around 1300-3000 nm.
   The basic of each channel is a rib waveguide 1 made of an electro-optic material, this means of lithium niobate (LiNbO₃) in the embodiment shown.
   The rib waveguide 1 has surface roughness of below 2 nm, in particular below 1 nm, by being fabricated by a method according to the invention.
- A multimode interference coupler (MMI). The MMI 52 comprises an input that is connected to the optical input 50 and at least three outputs, wherein each of the three channels is connected to another one of the channels.
   The MMI 52 is configured to direct light to the different channels by applying a DC voltage via electrodes 53 of the MMI.
- Each of the three channels comprises a Mach-Zehnder Interferometer (MZI).
   The path difference of the two branches of the MZI 55 can be tuned by applying a DC voltage to at least one of the two branches or - as it is the case in the embodiment shown - to apply different DC voltages to each of the two branches via electrodes 53.
   The MZIs 55 are configured to pulse down the light passing an MZI, for example to pulse it down to the nanosecond range.
   The waveguides of the MZI as well as its electrodes 53 are fabricated as disclosed with respect to the rib waveguide and the conductive elements 105.
- Each of the three channels comprises at least one filter element that is optimized for the specific wavelength range of the related channel. In other words, the first channel 61 comprises a first filter element 66, the second channel 62 comprises a second filter element 67, and the third channel 63 comprises a third filter element 68.
   The filter elements comprise as basic element a waveguide portion 57 that comprises a Bragg grating 2.
   In the embodiment shown, each filter element comprises a plurality, namely three, grating unit cells 56. The grating unit cells 56 differ in their grating profile to improve the overall filtering characteristic of the filter element, this means to be more selective concerning the transmitted wavelengths.
   The basic set-up of a grating unit cell 56 used in the exemplary embodiment of the integrated multichannel tunable filter 60 shown in Figures 5 is depicted in **Figure 6** (see below for details). In summary, a grating unit cell 56 comprises a sequence of waveguide portions 57 comprising a Bragg grating and a cavity 58 in between, wherein a grating period and a length of a cavity 58 differ from one grating unit cell 56 to another.
   The variation of the refractive index of the Bragg grating 2 of each grating unit cells 56 can be tuned individually by applying a DC voltage to the waveguide portions 57 comprising the Bragg grating 2 via electrodes, this means the conductive elements 105 disclosed above.
- Each of the three channels comprises a broadband directional coupler (BDC).
   The BDC 54 is configured to direct light either to the MZI 55 or to the filter element by applying a DC voltage via electrodes 53 of the BDC 54.
- The integrated multichannel tunable filter 60 comprises further a single optical output 59 for all three channels or individual outputs for each channel.

In summary, the integrated multichannel tunable filter 60 is equipped to shape the light entering the filter 60 via the optical input in frequency and time.

**Figure 6** shows a schematic of an exemplary basic set-up of a grating unit cell 56 used in the filter elements of the integrated multichannel tunable filter 60 shown in Figures 5-8.

The exemplary unit cell 56 comprises six grating units 64 and one cavity unit 65. In other words, the Bragg grating of each grating unit cell 56 comprises a superstructure.

The grating units 64 comprise the periodic variation in the refractive index by the rib waveguide comprising a periodic structure at the lateral wall of its rib.

The cavity unit 65 comprises a cavity 58, more precisely a Bragg grating cavity. Cavity unit 65 and grating units 64 are arranged in a manner that the cavity 58 is in the middle of a first Bragg grating portion and a second Bragg grating portion. The first Bragg grating portion is arranged at the entrance side of the cavity 58 and the second Bragg grating portion is arranged at the outlet side of the cavity 58.

In other words, the superstructure of the Bragg grating of each grating unit cell 56 forms a kind of a Fabry-Pérot interferometer.

The grating unit cell 56 comprises further the electrodes, this means the conductive elements 105, arranged to tune the refractive index of the LiNbO₃ - waveguide portion 57 comprising the periodic structure forming the Bragg grating 2.

**Figure 7** shows an SEM image of the structured rib 8 of the waveguide portion 57 comprising the Bragg grating 2 present in a grating unit 64 before fabricating any conductive elements and before providing the sample cladding.

The white bar given at the bottom of Figure 7 represents 1 µm.

**Figure 8** shows a schematic of a cross-section through a chip comprising the integrated multichannel tunable filter 60 at the position of a grating unit 54.

In exemplary embodiments of the chip as shown schematically in Figure 8, the residual thickness of the device layer 102 may be between 0 (i.e. strip waveguide) and 400 nm. The height of the structure rib 8 comprising the Bragg grating 2 may be between 200 and 1000 nm. The height of the electrodes may be between 100 and 2000 nm. The gap between the electrode may be between 3 and 7 µm, for example.

In a fabricated chip showing good performance, the residual thickness of the device layer 102 is around 400 nm. The height of the structure forming the rib 8 comprising the Bragg grating 2 is around 200 nm. The structure forming the rib 8 is around 800 nm at its bottom.

The gap between the electrodes 105 is around 7 µm. The height of the electrodes is around 1 µm.

## Claims

1. A method for fabricating micro- and nano-structures, the method comprises:
• a step (S1) of providing a layered structure comprising a resist layer (103);
• a step of inserting the layered structure into an e-beam facility;
• a step (S2) of determining the shape of a continuous area to be exposed to electrons on a surface of the layered structure;
• a step (S4) of providing an exposure protocol to the e-beam facility, wherein the exposure protocol is configured to control the e-beam facility in a manner that an electron beam exposes an area of the surface of the layered structure, said area of the surface of the layered structure comprising the shape of the continuous area to be exposed;
• a step (S5) of exposing the area of the surface of the layered structure by use of the exposure protocol;
**characterized by** a step (S3) of determining a plurality of sub-areas that sum up to the continuous area to be exposed, wherein a dimension of a first kind of sub-areas (5) of the plurality of sub-areas is smaller than a related dimension of a second kind of sub-areas (6) of the plurality of sub-areas, and by the exposure protocol being configured to control the e-beam facility in a manner that the plurality of sub-areas is exposed.

2. The method according to claim 1, wherein the layered structure comprises a device layer (102), wherein the layered structure is arranged on a base (101) that is neither conductive nor semi-conductive, wherein the layered structure does not comprises any conductive or semi-conductive layer and wherein the area of the surface of the layered structure that is exposed is given by a bare surface portion of the resist layer (103).

3. The method according to claim 1 or 2, wherein at least one portion of the contour (7) of the shape to be exposed is given by at least one sub-area (5) of the first kind of sub-areas.

4. The method according to one of claims 1-3, wherein the dimension of sub-areas (5) of the first kind depends on the degree of curvature of a portion of the contour (7) of the shape to be exposed, said portion being represented by the sub-areas of the first kind.

5. The method according to one of claims 1-4, wherein the exposure protocol is configured to control the e-beam facility in a manner that at least a portion of the plurality of sub-areas is exposed several times.

6. The method according to one of claims 1-5, wherein the electron beam characteristics are not altered for the plurality of areas.

7. The method according to one of claims 1-6, comprising
• a step (S6) of producing a mask (104) by developing the resist layer (103) such that the resist layer is removed except in a region having the shape of the continuous area to be exposed in a plane parallel to the original surface of the layered structure or such that the resist layer comprises a through opening having the shape of the continuous area to be exposed in a plane parallel to the original surface of the layered structure; and
• a step (S7) of transferring the mask (104) to a device layer (102), wherein the device layer becomes a device layer comprising a structure (8) having the shape of the continuous area to be exposed or its negative in a plane parallel to the original surface of the device layer,
wherein the step (S7) of transferring the mask comprises dry etching.

8. The method according to claim 7, wherein the method comprises a step (S12) of providing a conductive element (105), wherein the conductive element is provided relative to the structure (8) in a manner that a voltage and/or current applied to the conductive element influences the physical properties of the structure, wherein the step (S12) of providing the conductive element comprises:
• a sub-step (S8) of providing a photoresist layer (106) on top of the layer comprising the structure (8);
• a step (S10) of exposing an area of the photoresist layer (106) to electromagnetic radiation, wherein the exposed area corresponds to a footprint of the conductive element (105) or its negative.

9. The method according to claim 8, comprising:
• a step of providing at least one position and/or alignment marker in the exposure protocol, wherein the mask (104) comprises further the position and/or alignment marker and wherein the position and/or alignment marker are transferred to the device layer (102);
• a step (S9) of aligning the device layer comprising the structure (8) in a tool configured to expose the area of the photoresist layer (106), wherein the position and/or alignment marker is used during alignment.

10. The method according to one of claims 1-9, wherein the shape of the continuous area to be exposed comprises the footprint of a waveguide (1) or the footprint (10) of a portion (8) of a waveguide (1).

11. The method according to claim 10, wherein the shape of the continuous area to be exposed comprises a periodic structure (11) arranged into the footprint (10) or arranged at a lateral side of the footprint.

12. The method according to one of claim 1 or 11, wherein the layered structure comprises a device layer (102), wherein the device layer is made of a non-conductive and non-semiconductive material, in particular an electro-optic material, for example a ferro-electric material.

13. An optical device (60) comprising a waveguide (1), wherein a surface roughness of a lateral wall of the waveguide is below 2 nm.

14. The optical device (60) according to claim 13, wherein the optical device comprises a filter element (56, 66, 67, 68), wherein the filter element comprises a periodic structure (2) arranged at at least one lateral wall of the waveguide, wherein the waveguide is made of an electro-optic material.

15. The optical device (60) according to claim 14, wherein the optical device is an integrated electro-optic device (60) comprising on a single chip a first channel (61) and a second channel (62) that is connected in parallel to the first channel, wherein the first channel comprises a first filter element (66) having a first periodic structure, wherein the second channel comprises a second filter element (67) having a second periodic structure, wherein a refractive index of the periodic structures is tunable by use of an electro-optic effect.
